# EUROPÄISCHE PATENTSCHRIFT

(11) **EP 1 008 322 B1**
(45) Veröffentlichungstag und Bekanntmachung des Hinweises auf die Patenterteilung: **25.07.2001**
(21) Anmeldenummer: 99121746.4
(22) Anmeldetag: 03.11.1999
(51) Int. Cl.: A47J 31/44

(54) **Brühgerät**
Brewing apparatus
Appareil d'infusion

(30) Priorität: 09.12.1998 DE 19856713
(43) Veröffentlichungstag der Anmeldung: 14.06.2000
(73) Patentinhaber: Braun GmbH, 61476 Kronberg (DE)
(72) Erfinder: Peter, Andreas, 61476 Kronberg (DE); Kleemann, Christof, 65760 Eschborn (DE)

(56) Entgegenhaltungen:
- EP-B- 0 663 803
- DE-U- 8 912 802
- DE-U- 9 112 320

## Beschreibung

Die Erfindung betrifft ein Brühgerät in einer im Oberbegriff des Anspruches 1 erläuterten Ausbildung.

Ein Brühgerät ist bereits aus der EP-B-0 663 803 bekannt. Bei dieser Konstruktion ist die die Filtervorrichtung in ihrer den Getränkesammelbehälter überfangenden, eingeschwenkten Gebrauchslage sichernde Rückhaltevorrichtung manuell entriegelbar. Hierzu ist an der vorderen Geräteseite in Höhe des sich zwischen der Filtervorrichtung und dem diese überdekkenden Gehäuseabdeckteil befindenden Spaltes ein Betätigungsglied vorgesehen. Beim Aufbrühen von Kaffee oder Tee erwärmen sich Filtervorrichtung und Gehäuseabdeckteil und insbesondere das im Bereich des Spaltes vorgesehene Betätigungsglied der Rückhaltevorrichtung nicht nur beträchtlich, sondern diese Teile beschlagen auch mit Kondensat. Der Gebrauch des im Dampfbereich liegenden heißen Betätigungsgliedes der Rückhaltevorrichtung zum Entriegeln und Ausschwenken der Filtervorrichtung ist deshalb unmittelbar nach einem Brühvorgang zunächst kaum möglich.

Aus der DE-U-89 12 802 ist ein Brühgerät der eingangs beschriebenen Art bekannt, wobei an der Oberseite des Gehäuseabdeckteils ein zum Öffnen der Filtervorrichtung ausgebildetes Betätigungsglied angeordnet ist, welches zum Entriegeln der Filtervorrichtung von oben her durch Handkraft betätigt werden muß. Dabei wird die Filtervorrichtung mittels freigegebener bzw. ausgelöster Federkraft in einen bestimmten Ausschwenkwinkel überführt.

Hier setzt nun die Erfindung ein. Es liegt ihr die Aufgabe zugrunde, ein Brühgerät mit den Merkmalen des Oberbegriffes von Anspruch 1 so zu verbessern, daß unmittelbar nach Beendigung eines Brühvorgangs ein einfaches Öffnen seiner Filtervorrichtung möglich ist, ohne Gefahr zu laufen, bei der hierzu notwendigen Handhabung des Betätigungsgliedes der Rückhaltevorrichtung sich die Finger zu verbrennen.

Diese Aufgabe wird erfindungsgemäß durch die kennzeichnenden Merkmale des Anspruches 1 gelöst.

Damit befindet sich das Betätigungsglied in einem sich nur unwesentlich erwärmenden Bereich bzw. an einer Stelle außerhalb des Dampfaustrittsbereichs am Brühgerät, so daß das Öffnen der Filtervorrichtung für den Benutzer angenehm zu bewerkstelligen ist.

Die Rückhaltevorrichtung kann hierbei beliebig ausgebildet sein. Dementsprechend kann auch deren Betätigungsglied an jeder beliebigen Stelle am Gehäuse vorgesehen und sein und ist vorzugsweise in Art eines Bedienknopfes gestaltet.

Mit Vorzug zu gebrauchende Anordnungen des Betätigungsgliedes sind dabei in den Ansprüchen 2 und 3 erläutert, die den Vorteil bieten, die Rückhaltevorrichtung, technisch einfach konzipiert, mechanisch auszulegen und im oberen Gehäuseteil bzw. im Gehäuseabdeckteil günstig unterbringen zu können.

Dabei ist es zweckmäßig, die Rückhaltevorrichtung als Gesperre vorzusehen, wobei es zu bevorzugen ist, dasselbe als Grenzkraftgesperre auszulegen. Dies bietet den Vorteil, daß auch ein unsachgemäßes Öffnen bzw. Ausschwenken der Filtervorrichtung von Hand anstatt durch Betätigung des Betätigungsgliedes möglich ist, ohne die Rückhaltevorrichtung zu beschädigen.

Die Funktion der mechanisch ausgelegten Rückhaltevorrichtung kann bspw. derart sein, daß sie ausschließlich gegen die Wirkung der Schwenkvorrichtung arbeitet, die, als von der Rückhaltevorrichtung unabhängige Baueinheit, versucht, die Filtervorrichtung ständig aus ihrer Gebrauchsstellung herauszuschwenken.

Eine derart arbeitende Rückhaltevorrichtung ist in zu bevorzugender Ausführungsform in den Ansprüchen 5 bis 9 erläutert, wobei eine Ausgestaltung nach Anspruch 7 mit einfachen Mitteln deren Wirkungskraft als Grenzkraftgesperre ermöglicht.

Ein weiteres Funktionsprinzip der Rückhaltevorrichtung kann darin bestehen, auf die Erzeugung eines permanent auf die Filtervorrichtung einwirkenden Schwenkmoments zu verzichten und demgemäß die Schwenkvorrichtung in die Rückhaltevorrichtung zu integrieren. In vorteilhafter Weise läßt sich dies gemäß den Ansprüchen 10 und 11 bewerkstelligen.

In der Zeichnung ist ein Ausführungsbeispiel der Erfindung gezeigt. Es zeigen:
- Fig. 1: eine schaubildliche Darstellung eines als Kaffeemaschine vorgesehenen Brühgerätes, dessen Filtervorrichtung aus seiner Gebrauchslage ausgeschwenkt dargestellt ist,
- Fig. 2: in Seitenansicht den oberen Teil des Brühgerätes, dessen Gehäuse zur Veranschaulichung einer ersten Ausführungsform einer Rückhaltevorrichtung teilweise aufgebrochen dargestellt ist, wobei die Filtervorrichtung durch Verrasten mittels der Rückhaltevorrichtung in ihrer Gebrauchsstellung festgelegt ist,
- Fig. 2a: einen in Fig. 2 durch einen strichpunktierten Kreis angedeuteten Ausschnitt dieser Fig., in vergrößertem Maßstab,
- Fig. 3: eine Darstellung ähnlich Fig. 2, wobei die Rückhaltevorrichtung in Freigabestellung und die Filtervorrichtung in entrastetem, ausgeschwenktem Zustand gezeigt sind,
- Fig. 4: in schaubildlicher Darstellung die gegenseitige Zuordnung von Filtervorrichtung und Rückhaltevorrichtung in deren Freigabestellung,

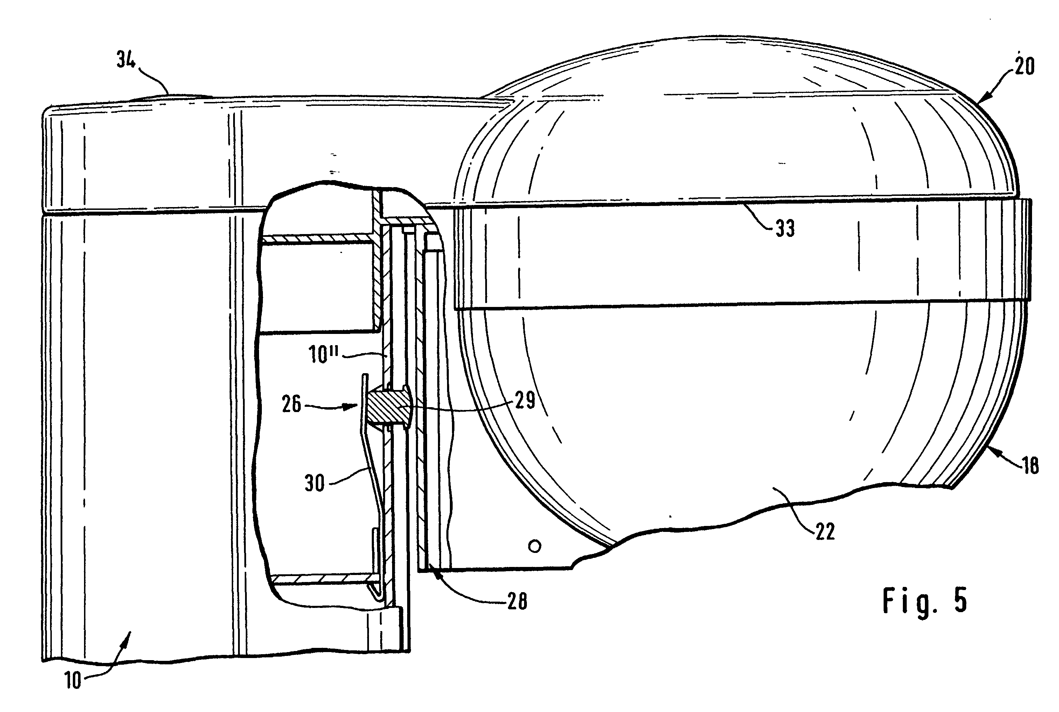

- Fig. 5: in Seitenansicht den oberen, geschlossen dargestellten Teil des Brühgerätes, dessen Gehäuse zur Veranschaulichung einer in dieses integrierten Schwenkvorrichtung für die Filtervorrichtung bereichsweise aufgebrochen dargestellt ist, wobei die Filtervorrichtung in ihrer Offenstellung geschwenkt ist,
- Fig. 6: eine Draufsicht der Schwenkvorrichtung gemäß Fig. 5 und
- Fig. 7: eine Draufsicht auf ein Brühgerät, das im Bereich seines Gehäuseabdeckteils horizontal geschnitten ist, zur Veranschaulichung eines zweiten Ausführungsbeispiels einer der Filtervorrichtung zugeordneten und mit einer Schwenkvorrichtung kombinierten Rückhaltevorrichtung, in deren verrastetem Zustand.

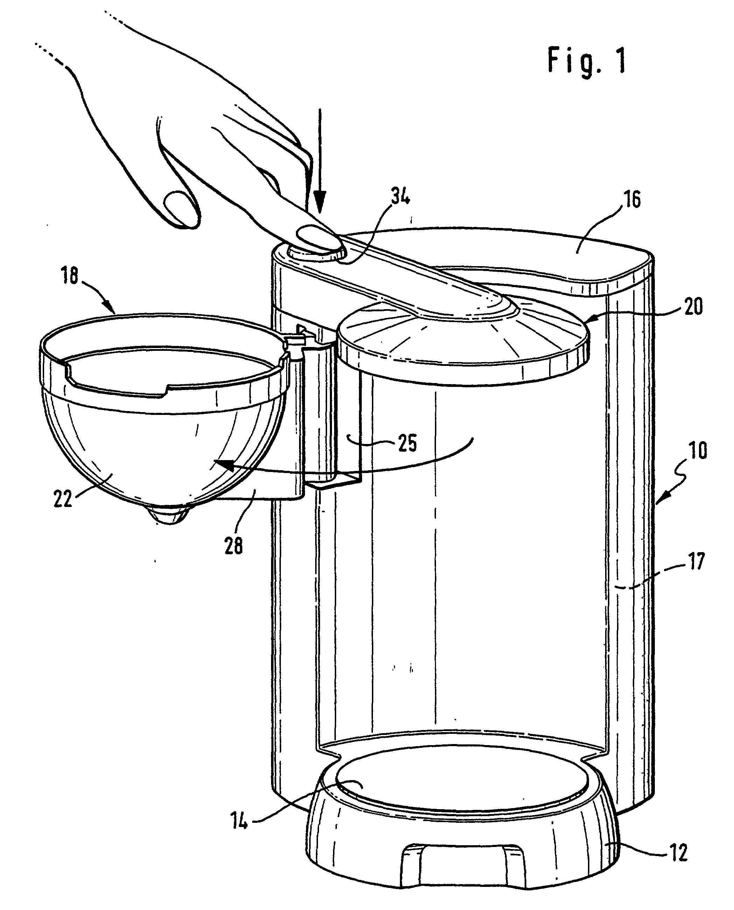

Wie Fig. 1 zeigt, weist die Kaffeemaschine ein aus Kunststoff bestehendes Gehäuse 10 auf, das im Querschnitt vorzugsweise ringsegment- bzw. nierenförmig ausgebildet ist und eine größere Höhe als Breite aufweist. An das untere Gehäuseende ist ein vorzugsweise kreisförmiger Gehäusefuß 12 angeformt, in den eine Warmhalteplatte 14 integriert ist, auf die eine den aufzubrühenden Kaffee aufnehmende Kaffeesammelkanne abstellbar ist.

Der obere Teil des Gehäuses 10 bildet einen durch einen aufklappbaren Deckel 16 verschließbaren Wasserbehälter 17, der bodenseitig mit einer im Gehäusefuß 12 angeordneten, nicht gezeigten, an sich bekannten Heizeinrichtung verbunden ist.

Erhitztes Wasser wird in bekannter Weise über eine gehäuseinnere Steigleitung in eine gehäuseoberseitig vorgesehene Auslaufkammer zugeführt, aus der es in eine als Ganzes mit 18 bezeichnete Filtervorrichtung gelangt.

Die nicht dargestellte Auslaufkammer befindet sich in einem auf das Gehäuse 10 fest aufgebrachten Gehäuseabdeckteil 20, das die Filtervorrichtung 18 in ihrer sich oberhalb der Kaffeesammelkanne befindenden Gebrauchslage scheibenartig überdeckt.

Die Filtervorrichtung 18 weist ein vorzugsweise tassenförmiges Filtergehäuse 22 auf, in das zum Kaffeeaufbrühen eine Filtertüte einsetzbar ist.

Um das Einsetzen bzw. die Entnahme einer Filtertüte in das Filtergehäuse 22 bzw. aus diesem zu ermöglichen, ist dasselbe relativ zum Gehäuseabdeckteil 20 um eine gehäusefeste, vertikale Schwenkachse 24 aus seiner Gebrauchslage in eine in Fig. 1 gezeigte Bedienlage horizontal verschwenkbar, in der es von oben frei zugänglich ist.

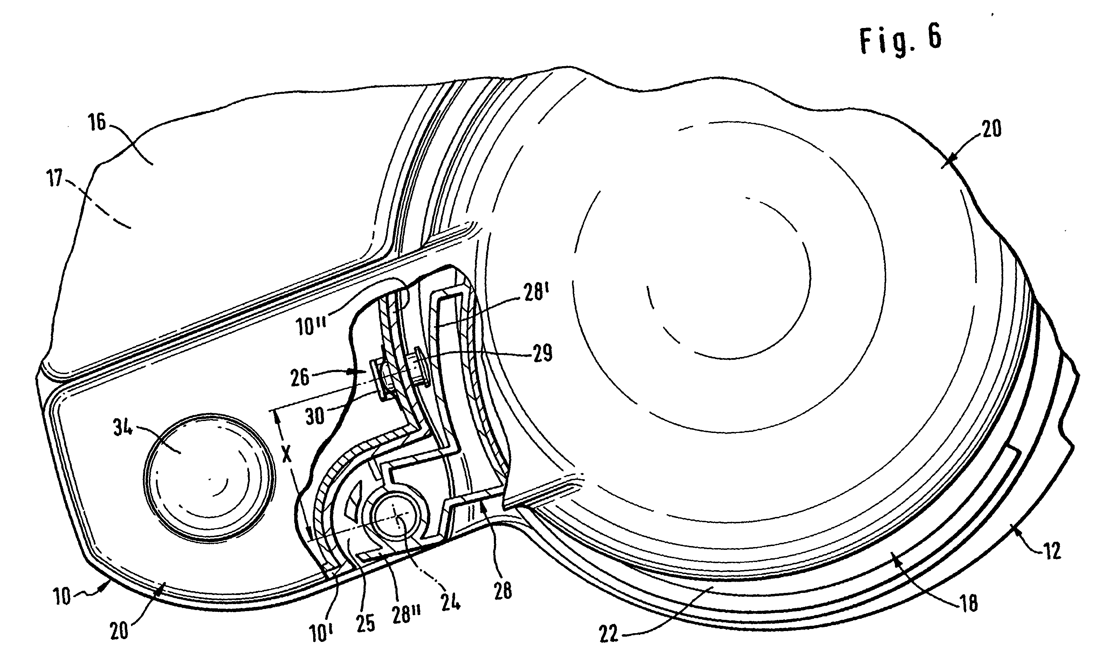

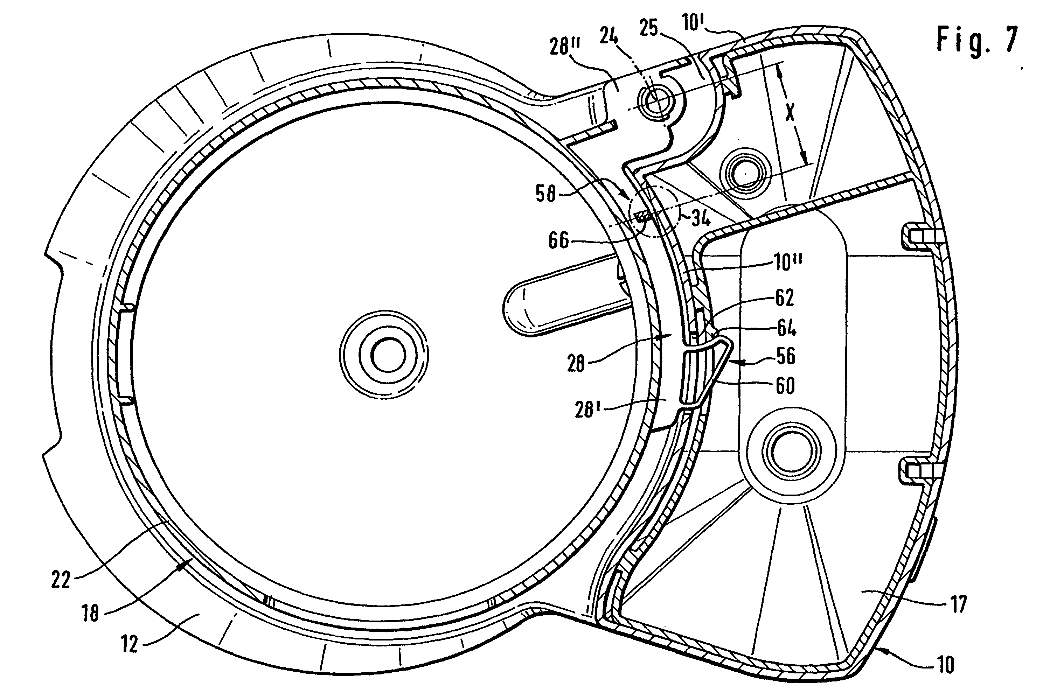

Wie aus den Figuren 6 und 7 ersichtlich ist, befindet sich die Schwenkachse 24 im oberen Gehäusebereich und nahe der linken Gehäuseseitenwand 10' innerhalb einer Wandeinbuchtung 25 bzw. seitlich des Wasserbehälters 17.

Mit 26 ist als Ganzes eine Schwenkvorrichtung bezeichnet, die im Gehäuse 10 vorzugsweise unterhalb des stationären Gehäuseabdeckteils 20 vorgesehen ist. Diese wirkt auf einen die Filtervorrichtung 18 tragenden und auf der Schwenkachse 24 gelagerten Träger 28 ein (siehe Fig. 6) und versucht, die Filtervorrichtung 18 ständig in ihrer ausgeschwenkten Bedienlage zu halten (Fig. 1). Dies wird z.B. mittels eines in der Gehäusevorderwand 10" horizontal verschiebbar geführten, am Träger 28 anliegenden Stößels 29 bewerkstelligt, der von einem vorgespannten Kraftspeicher, vorzugsweise in Form einer gehäusefesten Blattfeder 30, beaufschlagt ist. Als Kraftspeicher könnte auch eine auf der Schwenkachse 24 sitzende Drehfeder oder eine sich einerseits am Stößel und andererseits an einem Gehäuseteil abstützende Druckfeder vorgesehen sein.

Wie aus den Figuren 6 und 7 ersichtlich ist, ist der Träger 28 in etwa L-förmig ausgebildet, wobei dessen längerer Schenkel 28' vom Stößel 29 beaufschlagt ist, während dessen kürzerer, auf der Schwenkachse 24 gelagerter Schenkel 28" zugleich ein Verschlußteil bildet, durch das die Wandeinbuchtung 25 in der Gebrauchslage der Filtervorrichtung 18 seitlich abgedeckt wird.

Der Filtervorrichtung 18 ist vorzugsweise innerhalb des Gehäuseabdeckteils 20 eine als Ganzes mit 32 bezeichnete, in ihrer Funktion von der Schwenkvorrichtung 26 unabhängige Rückhaltevorrichtung zugeordnet, durch die die Filtervorrichtung 18 nach Einschwenken in ihre Gebrauchslage in dieser selbsttätig festgelegt wird.

Diese Rückhaltevorrichtung 32 ist zur Freigabe bzw. zum selbsttätigen Ausschwenken der Filtervorrichtung 18 mittels eines Betätigungsgliedes 34 manuell betätigbar, das vorzugsweise in Form eines Druckknopfes vorgesehen ist. Dieser Druckknopf 34 ist an der Kaffeemaschine außerhalb des Bereiches eines Spaltes 33 positioniert, der sich in der Gebrauchslage der Filtervorrichtung 18 zwischen dieser und dem Gehäuseabdeckteil 20 befindet. Dadurch wird vermieden, daß der Druckknopf 34 von Dampf und Kondensat beaufschlagt werden und sich dadurch unangenehm erwärmen kann.

Der Druckknopf 34 ist im Bereich des hinteren Endes des Gehäuseabdeckteils 20 in einem Durchbruch seines oberen Wandteils 20' auf einem vertikalen, gehäusefesten Führungszapfen 36 verschiebbar geführt und stützt sich auf einem Hebelarm 38' eines doppelarmigen Hebels 38 ab, der um eine horizontale Achse 39 verschwenkbar ist, und dessen anderer Hebelarm 38" mit der Filtervorrichtung 18 zu deren Festlegung zusammenwirkt. Teile der Rückhaltevorrichtung 32 und der Filtervorrichtung 18 bilden dabei gemeinsam ein Rastgesperre.

Der Hebelarm 38' stützt sich auf einer vorgespannten Druckfeder 40 ab, während der Hebelarm 38" am freien Ende ein Sperrelement in Form einer von diesem nach unten abragenden Nase 42 trägt, der im oberen Randbereich der Filtervorrichtung 18, zur Rückhaltevorrichtung 32 benachbart, einer nach oben und entgegen der Ausschwenkrichtung der Filtervorrichtung 18 bzw. nach hinten offenen Rastausnehmung 44 zugeordnet ist.

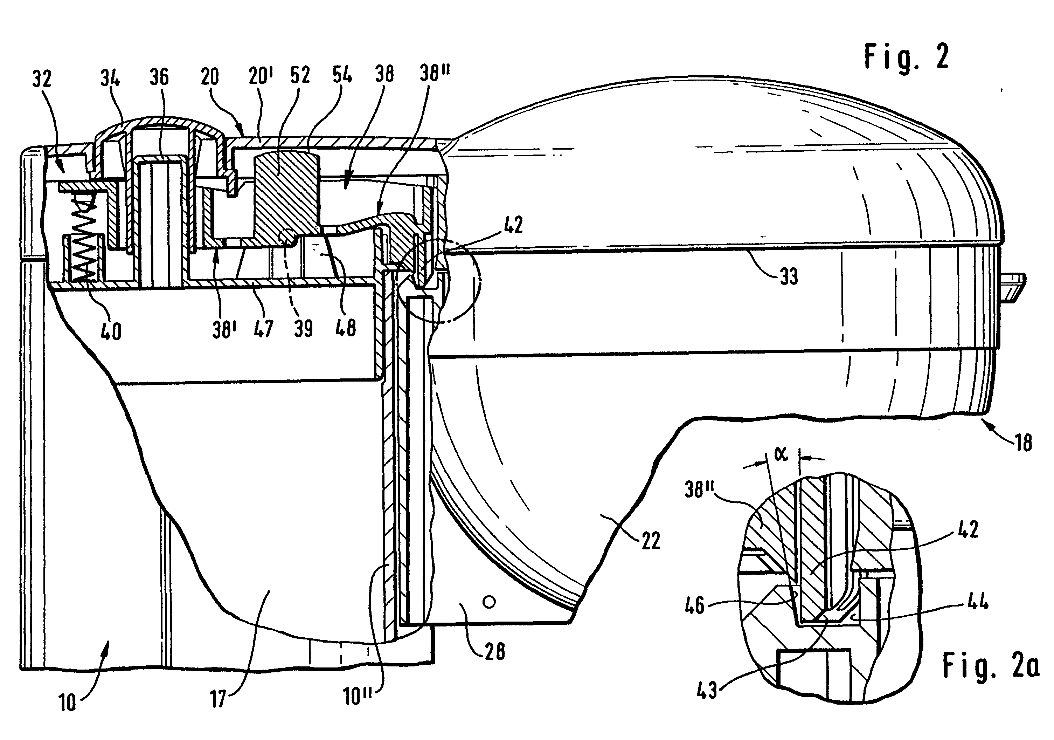

Wie aus Fig. 2a ersichtlich, ist der der Rückhaltevorrichtung 32 benachbarte und in verrastetem Zustand der Filtervorrichtung 18 von der Nase 42 des Hebels 38 hintergriffene Wandteil 46 der Rastausnehmung 44 unter einem Winkel α von vorzugsweise 15 bis 30° nach oben, außen gerichtet, wodurch die Teile 22, 38 ein einseitig kraftschlüssiges Grenzkraftgesperre bilden, welches sicherstellt, daß bei unsachgemäßem Ziehen am Filtergehäuse 22 sich das Rastgesperre über die durch den Wandteil 46 definierte, schiefe Ebene der rückseitig offenen Rastausnehmung 44 selbsttätig löst, die Filtervorrichtung 18 dadurch freigibt und so eine Beschädigung der sich miteinander in Eingriff befindenden Teile des Gesperres vermieden wird.

Eine Nasenschrägfläche 43 stellt hingegen sicher, daß beim Einschwenken der Filtervorrichtung 18 in ihre Gebrauchslage diese an dem Wandteil 46 der Ausnehmung 44 aufgleiten und den Hebel 38 entsprechend auslenken kann.

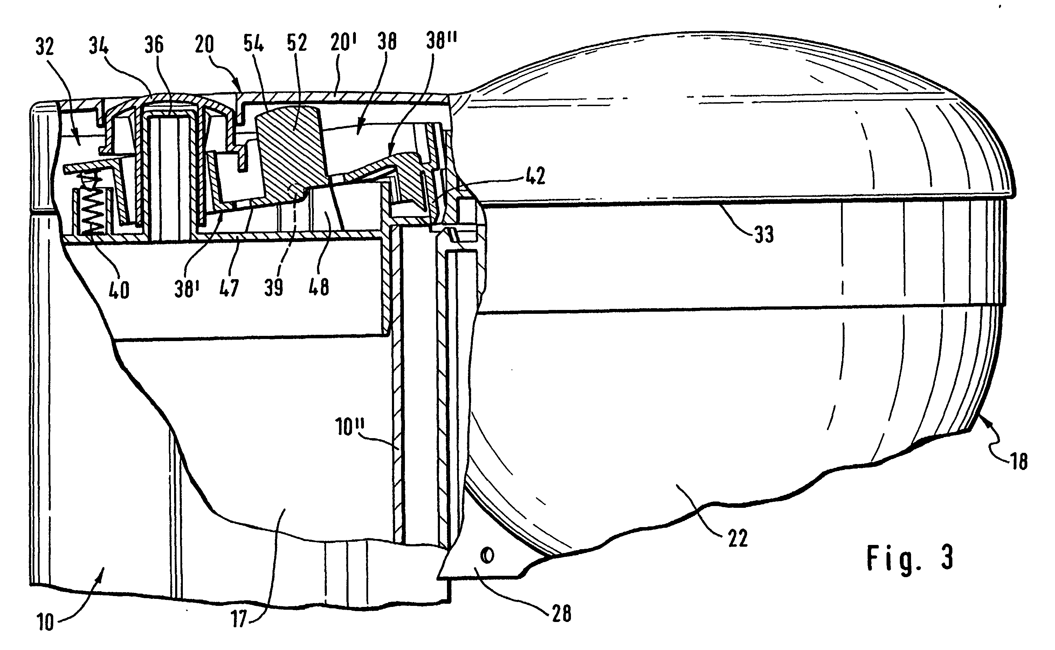

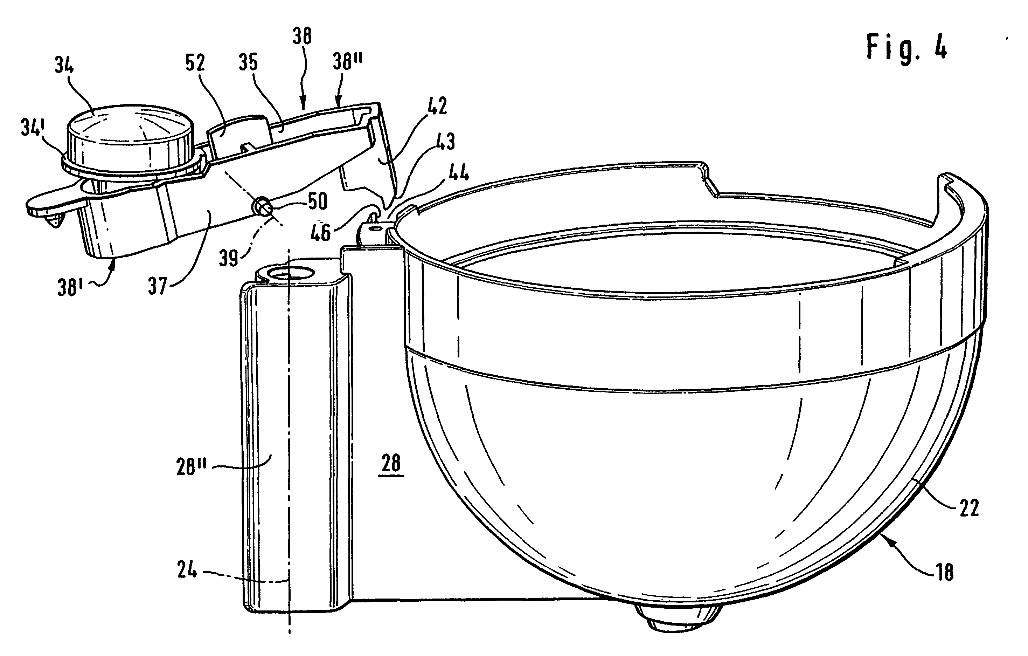

Der Hebel 38 nebst Gehäuse 10 und Filtervorrichtung 18 sind vorzugsweise durch Formteile aus Kunststoff gebildet. Der vorzugsweise im Querschnitt U-förmige Hebel 38 ist dabei zwischen zwei vom Boden 47 des Gehäuseabdeckteils 20 aufragenden Lagerböcken 48 gelagert, von denen in den Figuren 2 und 3 einer ersichtlich ist. In diese Lagerböcke 48 ist oben jeweils eine vorzugsweise offene Lagerschale eingeformt, die jeweils einen am Hebel 38 seitlich angeformten, die Hebellagerachse 39 definierenden Lagerzapfen 50 (siehe Fig. 4) aufnehmen.

Um die Lagerzapfen 50 in den offenen Lagerschalen zu sichern, ist der Hebel 38 mit einem zur Lagerachse 39 symmetrisch vorgesehenen, nach oben über diesen vorstehenden hökker- bzw. stegartigen Ansatz 52 versehen, der bis nahe an den oberen Wandteil 20' des Gehäuseabdeckteils 20 heranreicht und dessen obere Stirnfläche 54 auf einem Radius der Hebelschwenkachse 39 liegt.

Der zwischen den U-Schenkeln 35 und 37 des Hebels 38 geführte Druckknopf 34 hat bspw. mit einem Außenumfangsbund 34' (siehe Fig. 4) Linienberührung mit jeweils einer Schenkeloberkante, so daß bei vertikaler Beweglichkeit des Druckknopfes 34 eine Schwenkbewegung des Hebels 38 erfolgt.

Fig. 7 veranschaulicht eine konstruktive Lösung, bei der die der Filtervorrichtung 18 gehäuseseitig zugeordnete Rückhaltevorrichtung als Ganzes mit 56 bezeichnet ist, die mit der als Ganzes mit 58 bezeichneten Schwenkvorrichtung eine Baueinheit bildet.

Teile der Kaffeemaschine, die denjenigen der vorstehend erläuterten Maschinenkonstruktion gleichen, sind mit gleichen Bezugszahlen bezeichnet.

Hier ist der an das Filtergehäuse 22 angeformte Träger 28 an dessen Schenkel 28' mit einem von diesem in Richtung auf die benachbarte Gehäusewand 10" abragenden, federnd elastischen Sperrelement 60 ausgestattet, das in der Gebrauchsstellung der Filtervorrichtung 18 mit einer die vordere Gehäusewand 10" durchsetzenden Rastausnehmung 62 in Eingriff kommt und zur Festlegung derselben eine hintere, gehäusefeste Rückhalteschulter 64 vorzugsweise formschlüssig hintergreift.

Wird die Filtervorrichtung 18 manuell unsachgemäß in ihre Offenstellung verschwenkt, gibt das Sperrelement 60 nach, so daß Beschädigungen am Verrastungsmechanismus vermieden werden.

Bei dieser Konstruktion bildet der gegen die Wirkung einer Druckfeder verstellbare Druckknopf 34 einen Teil der Schwenkvorrichtung 58, indem dieser ein sich nach unten keilförmig verjüngendes Entrastungsglied 66 trägt, das bei seiner Betätigung zwischen Gehäusewand 10" und Filtergehäuse 22 bewegt wird und dabei das erforderliche Drehmoment zum Lösen des Rastgesperres erzeugt.

Ebensogut könnte das Entrastungsglied 66 auch Teil eines durch den Druckknopf 34 betätigbaren Schwenkhebels sein.

Das Sperrelement 60 besteht dabei vorzugsweise aus Kunststoff und wird beim Spritzen des Filtergehäuses 22 an dasselbe mit angespritzt.

Wie Fig. 7 zeigt, ist die Schwenkvorrichtung 58 am Gehäuse 10 bzw. im Gehäuseabdeckteil 20 mit dem Abstand X zur Schwenkachse 24 zwischen dieser und der Rückhaltevorrichtung 56 vorgesehen.

Durch eine Positionierung in diesem Bereich läßt sich sowohl die Entrastungskraft als auch die Geschwindigkeit der Öffnungsbewegung der Filtervorrichtung 18 ausbalancieren.

## Patentansprüche

1. Brühgerät zum Brühen von Kaffee oder Tee, mit einem einen Wasserbehälter (17) und eine elektrische Heizeinrichtung aufweisenden Gehäuse (10), einem auf einem Gehäusefuß (12) aufstellbaren Getränkesammelbehälter und einer darüber vorgesehenen, von einem Gehäuseabdeckteil (20) überfangenen Brühvorrichtung, die eine relativ zum Gehäuseabdeckteil (20) in seitlicher Richtung ausschwenkbare Filtervorrichtung (18) aufweist, die in ihrer eingeschwenkten Gebrauchsstellung durch eine mittels eines Betätigungsgliedes (34) zu lösende Rückhaltevorrichtung (32, 56; 64) festlegbar ist, wobei nach erfolgter Entriegelung die Filtervorrichtung (18) durch eine Schwenkvorrichtung (26; 58) selbsttätig ausschwenkbar ist, wobei das Betätigungsglied (34) außerhalb des Spaltbereiches (33) zwischen Filtervorrichtung (18) und Gehäuseabdeckteil (20) vorgesehen ist,
**dadurch gekennzeichnet,**
daß Teile der Rückhaltevorrichtung (32; 64) sowie der Filtervorrichtung (18) ein Gesperre bilden, das die Filtervorrichtung (18) selbsttätig in ihrer Gebrauchsiage hält, daß das Gesperre ein Rastgesperre ist und einen gegen die Wirkung einer Rückstellfeder (40) verschwenkbar gelagerten, doppelarmigen Hebel (38) aufweist, auf dessen einem Hebelarm (38') sich das Betätigungsglied (34) abstützt und dessen anderer Hebelarm (38") ein in einer Rastausnehmung (44) der Filtervorrichtung (18) verrastbares Sperrelement (42) trägt.

2. Brühgerät nach Anspruch 1,
**dadurch gekennzeichnet,**
daß das Betätigungsglied (34) an der Oberseite des Gehäuses (10) oder des Gehäuseabdeckteils (20) vorgesehen ist.

3. Brühgerät nach Anspruch 2,
**dadurch gekennzeichnet,**
daß das Betätigungsglied (34) im hinteren Gehäusebereich an der Gehäuseoberseite oder am Gehäuseabdeckteil (20) vorgesehen ist.

4. Brühgerät nach einem der vorhergehenden Ansprüche,
**dadurch gekennzeichnet,**
daß das Betätigungsglied einen Druckknopf (34) bildet, der in einer Öffnung des Gehäuses (10) bzw. des Gehäuseabdeckteils (20) gegen die Wirkung eines Kraftspeichers (40) verschiebbar ist.

5. Brühgerät nach Anspruch 1,
**dadurch gekennzeichnet,**
daß der doppelarmige Hebel (38) im Gehäuseabdeckteil (20) um eine horizontale Achse (39) verschwenkbar ist und daß sein Sperrelement eine von dem dieses tragenden Hebelarm (38") nach unten abragende Rastnase (42) bildet, der im oberen Randbereich der Filtervorrichtung (18) und an deren Außenumfang die Rastausnehmung (44) zugeordnet ist.

6. Brühgerät nach Anspruch 1,
**dadurch gekennzeichnet,**
daß der doppelarmige Hebel (38) in zwei einander gegenüberliegenden Halbschalen gelagert ist und oberhalb der Hebelschwenkachse (39) einen höcker- bzw. stegartigen Ansatz (52) aufweist, der mit geringem Abstand vom oberen Wandteil (20') des Gehäuseabdeckteils (20) endet und dessen obere Stirnfläche (54) auf einem Radius der Hebelschwenkachse (39) liegt.

7. Brühgerät nach Anspruch 5 oder 6,
**dadurch gekennzeichnet,**
daß ein im Zusammenwirken mit der Rastnase (42) ein Ausschwenken der Filtervorrichtung (18) verhindernder Wandteil (46) der Rastausnehmung (44) einen nach oben, außen gerichtete Schräge aufweist und daß die Rastausnehmung (44) sich entgegen der Ausschwenkrichtung öffnet.

8. Brühgerät nach einem der vorhergehenden Ansprüche 1 bis 7,
**dadurch gekennzeichnet,**
daß Schwenkvorrichtung (26) und Rückhaltevorrichtung (32) funktionsmäßig voneinander getrennt sind und daß die Schwenkvorrichtung (26) ständig versucht, die Filtervorrichtung (18) in Ausschwenkrichtung zu bewegen.

9. Brühgerät nach Anspruch 8,
**dadurch gekennzeichnet,**
daß die Schwenkvorrichtung (26) im Gehäuse (10) unterhalb des Gehäuseabdeckteils (20) einen horizontal geführten Stößel (29) aufweist, der einerseits von einer vorgespannten Feder (30) beaufschlagt ist und andererseits sich an der Filtervorrichtung (18) abstützt.

10. Brühgerät nach Anspruch 1,
**dadurch gekennzeichnet,**
daß die Rückhaltevorrichtung (56) ein mit einer in einem Wandteil (10") des Gehäuses (10) oder der Filtervorrichtung (18) vorgesehenen Rastausnehmung (62) in Eingriff bringbares, federnd elastisches Sperrelement (60) aufweist, das in der Gebrauchsstellung der Filtervorrichtung (18) eine Rückhalteschulter (64) der Rastausnehmung (62) hintergreift und daß durch das Betätigungsglied (34) ein keilförmiges Entrastungsglied (66) zwischen Gehäuse (10) bzw. Gehäuseabdeckteil (20) und Filtervorrichtung (18) bewegbar ist.

11. Brühgerät nach Anspruch 10,
**dadurch gekennzeichnet,**
daß Betätigungsglied (34) und Entrastungsglied (66) ein einstückiges Bauteil bilden, das zwischen der Schwenkachse (24) der Filtervorrichtung (18) und dem federnd elastischen Sperrelement (60) vorgesehen ist.

## Claims

1. A brewing apparatus for brewing coffee or tea, with a housing (10) accommodating a water reservoir (17) and an electrical heating unit, a beverage collection container seatable on a housing base (12) and a brewing device provided above said container and superposed by a housing cover part (20), said brewing device comprising a filtering device (18) adapted to be swung open relative to the housing cover part (20) in a lateral direction and to be located in its swung-shut position of use by a retaining device (32, 56; 64) requiring to be released by means of an actuating member (34), whereupon, after unlatching, the filtering device (18) is adapted to be swung open automatically by a swivel device (26; 58), said actuating member (34) being provided outside the gap area (33) between the filtering device (18) and the housing cover part (20),
**characterized in that** parts of the retaining device (32; 64) and of the filtering device (18) form a locking mechanism holding the filtering device (18) automatically in its position of use, that the locking mechanism is a snap-action locking mechanism and includes a double-armed lever (38) mounted for pivotal motion against the action of a return spring (40), said lever having one lever arm (38') upon which the actuating member (34) takes support and another lever arm (38") which carries a detent element (42) engageable with a snap action in a notch (44) of the filtering device (18).

2. The brewing apparatus as claimed in claim 1,
**characterized in that** the actuating member (34) is provided on the upper side of the housing (10) or of the housing cover part (20).

3. The brewing apparatus as claimed in claim 2,
**characterized in that** the actuating member (34) is provided in the housing rear area on the housing upper side or on the housing cover part (20).

4. The brewing apparatus as claimed in any one of the preceding claims,
**characterized in that** the actuating member forms a push-button (34) which is slidable in an opening of the housing (10) or the housing cover part (20) in opposition to the action of an energy storage device (40).

5. The brewing apparatus as claimed in claim 1,
**characterized in that** the double-armed lever (38) is pivotal in the housing cover part (20) about a horizontal axis (39), and that its detent element forms a detent nose (42) extending in downward direction from the lever arm (38") carrying the detent element, said detent nose being operatively associated with the notch (44) in the upper edge area of the filtering device (18) and on the outer circumference thereof.

6. The brewing apparatus as claimed in claim 1,
**characterized in that** the double-armed lever (38) is carried in two opposed half shells and has above the lever pivot axis (39) a hump- or ridge-type extension (52) which terminates a small distance from the upper wall part (20') of the housing cover part (20) and whose upper end surface (54) lies on a radius of the lever pivot pin (39).

7. The brewing apparatus as claimed in claim 5 or 6,
**characterized in that** a wall part (46) of the notch (44) which, in cooperation with the detent nose (42), prevents the filtering device (18) from swinging open, includes an upwardly and outwardly oriented bevel, and that the notch (44) opens in opposition to the swing-open direction.

8. The brewing apparatus as claimed in any one of the preceding claims 1 to 7,
**characterized in that** the swivel device (26) and the retaining device (32) are separated from each other functionally, and that the swivel device (26) always attempts to move the filtering device (18) into the swung-open position.

9. The brewing apparatus as claimed in claim 8,
**characterized in that** the swivel device (26) includes in the housing (10) underneath the housing cover part (20) a horizontally guided tappet (29) having its one end acted upon by a biased spring (30) while its other end takes support upon the filtering device (18).

10. The brewing apparatus as claimed in claim 1,
**characterized in that** the retaining device (56) includes a resilient detent element (60) engageable with a notch (62) provided in a wall part (10") of the housing (10) or the filtering device (18), said detent element engaging a retaining shoulder (64) of the notch (62) in the position of use of the filtering device (18), and that the actuating member (34) is operable to move a wedge-shaped unlocking member (66) between the housing (10) or housing cover part (20) and the filtering device (18).

11. The brewing apparatus as claimed in claim 10,
**characterized in that** the actuating member (34) and the unlocking member (66) combine to form an integral component that is provided between the swivel axis (24) of the filtering device (18) and the resilient detent element (60).

## Revendications

1. Appareil d'infusion de café ou de thé, comprenant un réservoir d'eau (17) et un boîtier (10) comportant un dispositif de chauffage électrique, un réservoir collecteur de boisson susceptible d'être posé sur un pied de boîtier (12) et un dispositif d'infusion prévu au-dessus de celui-ci, recouvert par une partie de couvercle de boîtier (20), qui présente un dispositif à filtre (18), susceptible de pivoter vers l'extérieur en direction latérale par rapport à la partie de couvercle de boîtier (20), lequel est susceptible d'être fixé dans sa position d'utilisation pivotée vers l'intérieur au moyen d'un dispositif de retenue (32, 56 ; 64) à relâcher au moyen d'un organe d'actionnement (34), et le verrouillage une fois effectué, le dispositif à filtre (18) est susceptible d'être pivoté automatiquement vers l'extérieur grâce à un dispositif de pivotement (26 ; 58), l'organe d'actionnement (34) étant prévu en dehors de la zone d'interstice (33) entre le dispositif à filtre (18) et la partie de couvercle de boîtier (20), caractérisé en ce que les parties du dispositif de retenue (32 ; 64) ainsi que le dispositif à filtre (18) forment un encliquetage qui maintient le dispositif à filtre (18) automatiquement dans sa position d'utilisation, en ce que l'encliquetage est un encliquetage à enclenchement et présente un levier (38) à double bras monté à pivotement à l'encontre de l'effet d'un ressort de rappel (40), de sorte que l'organe d'actionnement (34) prend appui sur un des bras de levier (38') de celui-ci et dont l'autre bras de levier (38") porte un élément de verrouillage (42) susceptible d'être enclenché dans un évidement d'enclenchement (44) du dispositif à filtre (18).

2. Appareil d'infusion selon la revendication 1, caractérisé en ce que l'organe d'actionnement (34) est prévu sur la face supérieure du boîtier (10) ou de la partie de couvercle de boîtier (20).

3. Appareil d'infusion selon la revendication 2, caractérisé en ce que l'organe d'actionnement (34) est prévu dans la région de boîtier postérieure sur la face supérieure de boîtier ou sur la partie de couvercle de boîtier (20).

4. Appareil d'infusion selon l'une quelconque des revendications précédentes, caractérisé en ce que l'organe d'actionnement forme un bouton-poussoir (34) qui est déplaçable dans une ouverture du boîtier (10) ou de la partie de couvercle de boîtier (20), respectivement, à l'encontre de l'action d'un accumulateur de force (40).

5. Appareil d'infusion selon la revendication 1, caractérisé en ce que le levier (38) à double bras est susceptible d'être pivoté autour d'un axe horizontal (39) dans la partie de couvercle de boîtier (20), et en ce que son élément de verrouillage forme un taquet d'enclenchement (42) faisant saillie vers le bas depuis le bras de levier (38") portant ledit élément de verrouillage, l'évidement d'enclenchement (44) étant associé audit taquet dans la région de bord supérieure du dispositif à filtre (18) et sur sa périphérie extérieure.

6. Appareil d'infusion selon la revendication 1, caractérisé en ce que le levier (38) à double bras est monté dans deux demi-coques se faisant mutuellement face et présente au-dessus de l'axe de pivotement de levier (39) un prolongement (52) en forme de bosse ou de barrette qui se termine à faible distance de la partie de paroi (20') supérieure de la partie de couvercle de boîtier (20) et dont la face frontale (54) supérieure se trouve sur un rayon de l'axe de pivotement de levier (39).

7. Appareil d'infusion selon la revendication 5 ou 6, caractérisé en ce qu'une partie de paroi (46) de l'évidement d'enclenchement (44), qui empêche, en coopération avec le taquet d'enclenchement (42), que le dispositif à filtre (18) pivote vers l'extérieur, présente une pente dirigée vers le haut et l'extérieur, et en ce que l'évidement d'enclenchement (44) s'ouvre à l'encontre de la direction de pivotement vers l'extérieur.

8. Appareil d'infusion selon l'une quelconque des revendications précédentes, caractérisé en ce que le dispositif de pivotement (26) et le dispositif de retenue (32) sont séparés l'un de l'autre du point de vue de leur fonctionnement et en ce que le dispositif de pivotement (26) tend en permanence à déplacer le dispositif à filtre (18) en direction de pivotement vers l'extérieur.

9. Appareil d'infusion selon la revendication 8, caractérisé en ce que le dispositif de pivotement (26) dans le boîtier (10) présente en dessous de la partie de couvercle de boîtier (20) un poussoir (29) guidé à l'horizontale qui est d'une part sollicité par un ressort (30) précontraint et qui prend d'autre part appui sur le dispositif à filtre (18).

10. Appareil d'infusion selon la revendication 1, caractérisé en ce que le dispositif de retenue (56) présente un élément de verrouillage (60) élastique à la manière d'un ressort, susceptible d'être mis en engagement avec un évidemment d'enclenchement (62) prévu dans une partie de paroi (10") du boîtier (10) ou du dispositif à filtre (18), et dans la position d'utilisation du dispositif à filtre (18), ledit élément de verrouillage engage par l'arrière un épaulement de retenue (64) de l'évidement d'enclenchement (62), et en ce que l'organe d'actionnement (34) permet de déplacer un organe de déverrouillage (66) en forme de coin entre le boîtier (10) ou la partie de couvercle de boîtier (20), respectivement, et le dispositif à filtre (18).

11. Appareil d'infusion selon la revendication 10, caractérisé en ce que l'organe d'actionnement (34) et l'organe de libération (66) forment un composant d'un seul tenant qui est prévu entre l'axe de pivotement (24) du dispositif à filtre (18) et l'élément de verrouillage (60) élastique à la manière d'un ressort.
